(19)

Europäisches
Patentamt
European
Patent Office
Office européen
des brevets

(11)  **EP 2 545 984 A1**

(12)  # EUROPEAN PATENT APPLICATION

(43) Date of publication:
**16.01.2013  Bulletin 2013/03**

(21) Application number: **11174238.3**

(22) Date of filing: **15.07.2011**

(51) Int Cl.:
**B01D 69/10** (2006.01)      **B01D 69/12** (2006.01)
**B01D 69/14** (2006.01)      **B01D 71/10** (2006.01)
**B01D 71/12** (2006.01)      **B01D 71/76** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gambro Lundia AB
220 10 Lund (SE)**

(72) Inventors:
• **Krause, Bernd
72414 Rangendingen (DE)**
• **Hornung, Markus
72147 Nehren (DE)**

(74) Representative: **Perchenek, Nils
Gambro Dialysatoren GmbH
Legal and Intellectual Property
Holger Crafoord-Strasse 26
72379 Hechingen (DE)**

(54)  **Composite membrane**

(57)  The present disclosure relates to a composite membrane comprising a porous support structure and a hydrophilic polymer forming a porous framework within the pore space of the support structure and a method for the production of the composite membrane. The composite membrane can be used for removing virus particles from liquids.

EP 2 545 984 A1

## Description

### Technical Field

The invention relates to a composite membrane comprising a porous support structure and a hydrophilic polymer forming a porous framework within the pore space of the support structure and a method for the production of the composite membrane. The composite membrane can be used for removing virus particles from liquids.

### Background of the Invention

Virus removal by filtration techniques is known in the art. State of the art virus removal filters in the biotech industry are manufactured from either (i) cellulose or (ii) synthetic polymers (PES, PSU, PVDF). The former type of membranes shows unsatisfactory rejection behavior for virus particles (expressed as LRV), while the flux that can be achieved with the latter type of membranes is limited.

It would be desirable to provide a virus filter membrane which shows both excellent rejection of parvovirus and high passage of mAb at high feed concentrations and at the same time allows for high feed flux.

US 5,084,173 discloses a method for the production of a plasma separation membrane comprising applying a solution of a water-insoluble hydrophilic copolymer, for example, an ethylene-vinyl alcohol copolymer, in an organic solvent or a mixture of an organic solvent and water onto an oriented polyolefin membranous matrix and subsequent drying to remove the solvent. The copolymer forms a coat covering substantially the overall surface of the matrix.

### Summary of the Invention

The present disclosure provides a composite membrane which can be used for virus removal from liquids. The membrane shows (i) high rejection for gold nano-particles (having 20 nm diameter and simulating parvovirus), (ii) high passage of Mab feed solution (sieving coefficient for IgG $\approx$ 1), (iii) high feed flux (which results in a high feed capacity for this type of membrane), and (iv) low protein adsorption and low fouling, which ensures a stable high filtration rate over time. The present disclosure also provides methods for production of the composite membrane and devices comprising the composite membrane.

### Detailed Description of the Invention

It has been found that a composite membrane comprising a porous support structure and a hydrophilic polymer forming a porous framework within the pore space of the support structure shows improved filtration properties and has high mechanical stability.

The hydrophilic polymer is selected from the group consisting of cellulose, cellulose derivatives, and poly(vinyl alcohol-co-ethylene).

Examples of suitable types of cellulose for preparing the composite membrane of the invention include beech sulfite pulp or cotton linters. Examples of suitable cellulose derivatives include esters like cellulose acetate; water-insoluble alkyl ethers like ethylcellulose. Suitable poly(vinyl alcohol-co-ethylene)s are insoluble in water. In one embodiment of the invention, a poly(vinyl alcohol-co-ethylene) containing 25 to 50 mol-% of ethylene units is used to modify the porous membrane. In one embodiment of the process, the poly(vinyl alcohol-co-ethylene) has a number average molecular weight of at least 10,000 g/mol.

The porous support structure can have any suitable geometry according to the needs of the intended use, e.g. it can take the form of a flat sheet, a hollow fiber, or be shaped to form chambers or other geometries needed. It can also take the form of a woven or nonwoven mat of fibers. In one embodiment of the invention, the porous support structure is a hollow fiber membrane. In another embodiment of the invention, the porous support structure is a flat sheet membrane.

The material of the porous support structure is not particularly limited. For instance, the porous support structure can be comprised of synthetic polymers. Examples of suitable synthetic polymers include polyolefins like polyethylene (PE) or polypropylene (PP); cycloolefin copolymers (COC); polyvinylidene fluoride (PVDF); polytetrafluoroethylene (PTFE); polycarbonates (PC); polyesters like PET; polysulfones (PSf); polyethersulfones (PES); polyacrylonitriles (PAN); poly(meth)acrylates like PMMA; polyamides (PA); polyetherimides (PEI); and their copolymers and blends of the individual polymers. In one embodiment of the invention, the porous support structure is comprised of a blend of polyethersulfone and polyvinylpyrrolidone. The porous support structure can also be comprised of inorganic materials like glass, silicon dioxide, or ceramics like alumina, titanium dioxide or zirconium dioxide.

The pore structure and pore dimensions of the porous support structure also can vary over a wide range. In one embodiment, the porous support structure has a lamellar constitution. In another embodiment, the porous support structure forms a three-dimensional network having a sponge structure. In still another embodiment, the porous support structure forms a three-dimensional network having a finger structure comprising macroscopic voids. The pore structure of the porous support can be uniform or asymmetric. In one embodiment of the invention, the porous support structure is microporous, i.e. average pore diameter of the support structure is in the range of from 0.1 $\mu$m to 0.7 $\mu$m, for instance from 0.2 $\mu$m to 0.4 $\mu$m. In another embodiment of the invention, the average pore diameter of the porous support structure is less than 100 nm, e.g. the porous support structure is an ultrafiltration membrane.

In the composite membrane of the invention, the pore space of the porous support structure is filled with a hydrophilic polymer which forms a porous framework within the pore space of the support. In one embodiment of the invention, this porous framework has a sponge-like structure. In one embodiment of the invention, the sponge-like structure is substantially uniform and free of vacuoles (empty spaces included in the sponge-like structure and having a largest dimension of more than about 5 microns). In another embodiment of the invention, the sponge-like structure is asymmetric, i.e. pore size varies within the sponge-like structure, e.g. layers having different pore size are present within the sponge-like structure, or pore size increases or decreases within the sponge-like structure from one outer surface of the porous support structure towards the other outer surface of the porous support structure.

The composite membrane of the invention is prepared by forming the porous framework of the hydrophilic polymer within the porous support structure, filling the pore space of the porous support structure. In one embodiment of the invention, the composite membrane is prepared by precipitating the hydrophilic polymer from solution inside the porous support structure.

The solution of the hydrophilic polymer is prepared using a solvent which is able to dissolve the hydrophilic polymer but does not dissolve the porous support structure. Depending on the material of the porous support structure, suitable solvents include alcohols like 1-propanol, 2-propanol, phenol, m-cresol, formic acid, dimethyl sulfoxide, and ionic liquids. In one embodiment of the invention, 1-propanol or 2-propanol is used. In another embodiment of the invention, dimethyl sulfoxide is used. In addition to the organic solvents mentioned before, water may also be present in the solution.

In one embodiment of the process, the solvent for the hydrophilic polymer comprises an ionic liquid. Suitable ionic liquids are disclosed in WO 2003/029329 and DE 10 2005 062 608 A1, both incorporated herein by reference. In one embodiment of the invention, the ionic liquids comprise cations selected from 1-ethyl-3-methylimidazolium, 1,3-dimethylimidazolium and 1-butyl-3-methylimidazolium, and anions selected from halides, perchlorate, pseudohalides, sulfate, phosphate, alkyl phosphates and $C_1$-$C_6$ carboxylates. In another embodiment of the invention, the ionic liquids are selected from the group consisting of 1-ethyl-3-methylimidazol acetate, 1-allyl-3-methylimidazol chlorate, 1-allyl-3-methylimidazol acetate, and 1-butyl-3-methylimidazol acetate. In another embodiment, the ionic liquid comprises cations selected from methyl-tri-n-butylammonium, methylimidazolium, 1-ethyl-3-methylimidazolium, 1-butyl-3-methylimidazolium, 1-ethyl-2,3-dimethylimidazolium, 1,2,3-trimethylimidazolium, 1,2,4-trimethylpyrazolium, in particular 1-ethyl-3-methylimidazolium and 1-butyl-3-methylimidazolium; and anions selected from acetate, ethylsulfate, methylsulfate, thiocyanate, hydrogensulfate, tetrachloroaluminate, and chloride, in particular acetate. In a particular embodiment, the solvent is 1-ethyl-3-methylimidazolium acetate (EMIM OAc).

The concentration of the hydrophilic polymer in the solution has to be sufficiently high in order to obtain a porous framework which fills the pore space of the support structure. On the other hand, viscosity of the solution has to be low enough to allow the solution to completely permeate the porous support structure.

The concentration of the hydrophilic polymer in the solution generally is in the range of from 8 to 30 wt.-%, for instance 8 to 15 wt.-%. In one embodiment, the concentration of the hydrophilic polymer in the solution is 15 to 25 wt.-%.

In one embodiment of the process, a solution of the hydrophilic polymer is provided on one side of the porous support structure, and a precipitation liquid is provided on the other side of the porous support structure. The solution of the hydrophilic polymer and the precipitation liquid are then allowed to permeate through the porous membrane by diffusion and/or convection, and the hydrophilic polymer is precipitated within the pore space of the porous support structure, forming a porous framework within the pore channels of the porous support structure.

In another embodiment of the process, the porous support structure is soaked with a solution of the hydrophilic polymer, excess solution is removed from the soaked support structure, and the porous support structure is subsequently contacted with the precipitation liquid from one side or from both sides. In an exemplary embodiment of the process involving a hollow fiber porous membrane as porous support structure, the lumen of the fiber is filled with a solution of the hydrophilic polymer. The fiber wall is soaked with the solution either by capillary action, or in cases where this is insufficient to completely fill the pore space of the fiber with the solution, by applying a pressure gradient between the lumen and the outside of the fiber. Excess solution is purged from the lumen of the fiber, e.g., using pressurized air. Precipitation of the hydrophilic polymer then is effected by applying the precipitation liquid to either or both sides of the membrane, i.e., by injecting precipitation liquid into the lumen of the fiber, by flushing the outside of the fiber with the precipitation liquid, by immersing the fiber into a bath containing the precipitation liquid, or by flushing the inside and the outside of the fiber with precipitation liquid.

The precipitation liquid generally is water or a combination of water and a solvent for the hydrophilic polymer. The proportion of the solvent for the hydrophilic polymer in the precipitation liquid usually is in the range of from 0 to 90 wt%, for instance, from 20 to 70 wt%, e.g., from 40 to 60 wt%. In one embodiment of the process, the precipitation bath comprises water in an amount of from 40 to 50 wt.-%, and 1-ethyl-3-methylimidazolium acetate in an amount of from 50 to 60 wt.-%.

The temperature of the precipitation liquid generally is in the range of from 0 to 50 °C. In many cases, ambient temperature will yield satisfactory results. Precipitation time can also be varied over a wide range. Normally, 5 to 30 minutes will be sufficient.

After the precipitation of the hydrophilic polymer has been completed, the composite membrane obtained usually is washed with de-ionized water and, optionally, dried. In another embodiment of the process, the washed composite membrane is treated with a pore stabilizer, e.g., glycerol or a mixture of water and glycerol, in order to stabilize the pores. It can then be stored in a non-solvent.

The composite membranes can be stored in an aseptic medium, for example in aqueous formaldehyde solution. They can also be impregnated with a water-retention agent, such as ethylene glycol or, preferably, glycerol, for example by immersion into a mixture of water and glycerol containing at least 40% by weight of glycerol, by techniques which are known in the art.

The composite membrane does not allow the passage of virus particles having a diameter of 20 nm or more while it is permeable to antibodies like IgG. The composite membranes are generally free of vacuoles (empty spaces included in the wall and having a largest dimension of more than about 5 microns) .

In a specific embodiment of the present invention, the composite membrane is a hollow fiber membrane. A hollow fiber membrane of the invention is further characterized by having an inner diameter of from 50 to 2,000 $\mu$m, preferably of from 50 to 1,000 $\mu$m, and more preferably from 100 to 500 $\mu$m. The wall thickness is generally from 3% to 30% of the external diameter, i.e. generally from 5 to 200 $\mu$m, preferably from 10 to 80 $\mu$m, and more preferably from 20 to 70 $\mu$m.

In another specific embodiment of the present invention, the composite membrane is a flat sheet membrane. The thickness of a flat sheet membrane according to the invention may vary between 10 $\mu$m and 200 $\mu$m. A thickness of 20 $\mu$m to 100 $\mu$m may be especially advantageous for most applications. Usually, several flat sheet membranes will be combined in the form of a stack to form a module for use in the present invention.

The hydraulic permeability of the membranes of the invention, measured at 37 °C, may vary from $10 \cdot 10^{-4}$ to $500 \cdot 10^{-4}$ cm$^3$/(cm$^2$·bar·sec), for instance from $15 \cdot 10^{-4}$ to $250 \cdot 10^{-4}$ cm$^3$/(cm$^2$·bar·sec).

The membranes of the invention have a sieving coefficient for IgG in aqueous solution of at least 0.8, e.g. at least 0.9, and in particular 1.0. The membranes of the invention also show a sieving coefficient of 1.0 for albumin.

The membranes of the invention show a retention of gold nano-particles having 20 nm diameter (simulating porcine parvovirus), GPR (gold particle retention, defined as log(A/F), A/F being the ratio of the gold particle concentration in the feed and in the filtrate), of > 1.4, preferably > 1.7, more preferably > 2.0, in particular > 2.3. The GPR is proportional to the rate of retention of virus particles by the membrane. The membrane of the present invention can be advantageously used for the removal of virus particles from liquids.

In one embodiment of the present invention, the composite membrane has a hydraulic permeability of from $10 \cdot 10^{-4}$ to $500 \cdot 10^{-4}$ cm$^3$/(cm$^2$·bar·sec), preferably of from $15 \cdot 10^{-4}$ to $250 \cdot 10^{-4}$ cm3/(cm$^2$·bar·sec), a sieving coefficient for IgG of greater than 0.8 and a GPR of greater than 1.4, preferably greater than 1.7, more preferably greater than 2.0, most preferably grater than 2.3.

The composite membrane can be used for separating virus particles from a liquid by filtration of the liquid through the membrane. In one embodiment of the invention, the filtration is normal-flow filtration (NFF), which is also called dead-ended or direct flow filtration. In another embodiment of the invention, the filtration is tangential-flow filtration (TFF).

Thus, a further aspect of the present invention is a device for removing virus particles from liquids, comprising a membrane of the invention.

The membrane used in the device can take the form of a sheet or a plurality of sheets, e.g. a stack of planar membranes. Alternatively, the membrane used in the device can take the form of a hollow fiber or a plurality of hollow fibers, e.g. a bundle of hollow fiber membranes. Suitable sheets and fibers, respectively, their properties and preparation have been described above.

In one embodiment of the device, the membrane forms an interface between two fluid compartments of the device.

An exemplary device comprises two compartments separated by a semipermeable membrane mounted in a casing, a first internal compartment fitted with two accesses and a second external compartment comprising one or two accesses, both compartments being also separated by a potting compound, based on an appropriate adhesive compound, intended for forming as applicable (i) a cylindrical partition separating both compartments of said device containing a semipermeable membrane of the hollow fiber bundle type as defined above or (ii) a tight seal in said device including a semipermeable membrane of the sheet membrane type as defined above.

Another exemplary device comprises a plurality of hollow fiber membranes, contained within an outer shell, and configured so that fluid within a space external to the hollow fibers (i.e., an extracapillary compartment) is segregated from fluid passing through the hollow fibers and their corresponding orifices. Additionally, the device includes two manifold end chambers within the outer shell on opposite ends of the device. Each of the two orifices of the lumen of a hollow fiber connects to a different end chamber. The end chambers and the extracapillary compartment are separated by the semipermeable membranes of the hollow fibers.

A further aspect of the invention is a method of removing virus particles from a liquid, comprising filtration of the liquid through a composite membrane of the invention. In one embodiment of the invention, the filtration is normal-flow filtration (NFF), in another embodiment of the invention, the filtration is tangential-flow filtration (TFF).

The membrane, the method, and the device of the invention can advantageously be used many processes in the biopharmaceutical industry which require removal of virus particles from a liquid.

## Examples

## Methods

### Preparation of mini-modules

Mini-modules [= fiber bundles in a housing] are prepared by putting the fiber bundle in the mini-module housing and cutting them to a defined length of 20 cm. Then, the ends of the fibers are closed with a melting device. Then, the ends of the fiber bundle are potted with polyurethane. Subsequently, the ends of the fibers are cut open. The mini-modules ensure protection of the fibers.

The number of fibers required is calculated for an effective surface A of 10 cm$^2$ according to equation (1)

$$A = \pi \times d_i \times l \times n \ [cm^2] \tag{1}$$

with
$d_i$ = inner diameter of fiber [cm]
n = amount of fibers
l = effective fiber length [cm]

### Hydraulic Permeability (Lp) of mini-modules

The hydraulic permeability of a membrane bundle is determined by pressing an exact defined volume of water under pressure through the membrane bundle, which has been sealed on one side, and measuring the required time. The hydraulic permeability can be calculated from the determined time, the effective membrane surface area, the applied pressure and the volume of water pressed through the membrane. From the number of fibers, the fiber length as well as the inner diameter of the fiber, the effective membrane surface area is calculated. The membrane bundle has to be wetted thirty minutes before the Lp-test is performed. For this purpose, the membrane bundle is put in a box containing 500 ml of ultrapure water. After 30 minutes, the membrane bundle is transferred into the testing system. The testing system consists of a water bath that is maintained at 37 °C and a device where the membrane bundle can be implemented mechanically. The filling height of the water bath has to ensure that the membrane bundle is located underneath the water surface in the designated device. To avoid that a leakage of the membrane leads to a wrong test result, an integrity test of the membrane bundle and the test system has to be carried out in advance. The integrity test is performed by pressing air through the membrane bundle that is closed on one side of the bundle. Air bubbles indicate a leakage of the membrane bundle or the test device. It has to be checked if the leakage can be associated with the wrong implementation of the membrane bundle in the test device or if a real membrane leakage is present. The membrane bundle has to be discarded if a leakage of the membrane is detected. The applied pressure of the integrity test has to be at least the same value as the applied pressure during the determination of the hydraulic permeability in order to ensure, that no leakage can occur during the measurement of the hydraulic permeability because of a too high applied pressure.

### Sieving coefficient of IgG in aqueous solution

The sieving coefficient of IgG is determined by dead-end filtration of a solution of 2,5 g/l IgG in PBS buffer.

● The module is first washed with distilled water (10 ml at a flow rate of 0.04 to 1.5 ml/min).

● Then 100 ml of the IgG solution are filtered through the module at a flow rate of 0.7 ml/min.

● A sample of the ultrafiltrate is collected every 15 minutes and analyzed for IgG content using the UF-EW method.

● Overall filtration time is 2.5 hours.

Gold particle retention (GPR)

The module is flushed with distilled water and a volume of 30 mL distilled water is used. With the first 10 mL the blood side is flushed (flow adjusted for a pressure of 0.2-0.3 bar) and with the other 20 mL the filtrate side (dead-end filtration) is flushed. A flow is used that result in a pressure of 0.98 bar during the dead-end filtration procedure.

A solution comprising gold particles having a diameter of approximately 20 nm (Plano) is diluted the following: 100 mL of Plano solution is mixed with 203 mg of Polyoxyethylene β-naphtylether and 1227 mg of Poly(sodium 4-styrene-sulfonate homogeneously. The solution is put afterwards for 15 minutes in an ultrasonic bath. This solution is pumped through the mini-module at a flow rate of 0.35 ml/min.

The particle content in the feed and the filtrate is determined photometrically by measuring extinction at 530 nm, e.g. using a Ultrospec™ 3000 pro photometer.

The GPR value is calculated according to equation (4)

$$GPR = \log_{10}\left(\frac{A}{F}\right) \qquad (4)$$

with A being the extinction of the feed solution;
F being the extinction of the filtrate;

**Claims**

**1.** A composite membrane comprising a porous support structure and a hydrophilic polymer selected from the group consisting of cellulose, cellulose derivatives, and poly(vinyl alcohol-co-ethylene) forming a porous framework within the pore space of the porous support structure.

**2.** The composite membrane of claim 1, wherein the porous support structure is comprised of a synthetic polymer.

**3.** The composite membrane of claim 2, wherein the synthetic polymer is selected from the group consisting of polyolefins; cycloolefin copolymers; polyvinylidene fluoride; polytetrafluoroethylene; polycarbonates; polyesters; polysulfones; polyethersulfones; polyacrylonitriles; poly-(meth)acrylates; polyamides; polyetherimides; and their copolymers and blends of the individual polymers.

**3.** The composite membrane of claim 1, wherein the porous support structure is comprised of inorganic materials.

**4.** The composite membrane of claim 3, wherein the inorganic material is glass, silicon dioxide, alumina, titanium dioxide or zirconium dioxide.

**5.** The composite membrane of any one of claims 1 to 4, wherein the average pore diameter of the porous support structure is in the range of from 0.1 μm to 0.7 μm.

**6.** The composite membrane of any one of claims 1 to 4, wherein the average pore diameter of the porous support structure is smaller than 100 nm.

**7.** A process for preparing the composite porous membrane of any one of claims 1 to 6, comprising forming a porous framework of the hydrophilic polymer within the pore space of the porous support structure.

**8.** The process of claim 7, wherein the porous framework of the hydrophilic polymer is formed by precipitating the hydrophilic polymer from solution within the pore space of the porous support structure.

**9.** The process of claim 8, wherein the solution of the hydrophilic polymer comprises 1-propanol or 2-propanol.

**10.** The process of claim 8, wherein the solution of the hydrophilic polymer comprises dimethyl sulfoxide.

**11.** The process of claim 8, wherein the solution of the hydrophilic polymer comprises an ionic liquid.

**12.** The process of claim 11, wherein the ionic liquid comprises 1-ethyl-3-methylimidazolium acetate.

**13.** The process of any one of claims 8 to 12, wherein the concentration of the hydrophilic polymer in the solution is from 8 to 30 wt%.

**14.** A virus filter comprising the composite membrane of any one of claims 1 to 6.

**15.** Use of the composite membrane of any one of claims 1 to 6 for removing virus particles from a liquid by filtration of the liquid through the membrane.

Europäisches
Patentamt

European
Patent Office

Office européen
des brevets

# EUROPEAN SEARCH REPORT

Application Number

EP 11 17 4238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 666 129 A1 (ASAHI CHEMICAL IND [JP]) 7 June 2006 (2006-06-07) * abstract * * claim 1 * * paragraphs [0024] - [0030] * | 1-8, 13-15 | INV. B01D69/10 B01D69/12 B01D69/14 B01D71/10 B01D71/12 B01D71/76 |
| X | EP 1 775 016 A1 (MILLIPORE CORP [US]) 18 April 2007 (2007-04-18) * paragraphs [0023] - [0036] * | 1-6 | |
| X | US 5 294 338 A (KAMO JUN [JP] ET AL) 15 March 1994 (1994-03-15) * column 8, line 32 - column 10, line 25 * | 1-13 | |
| X | US 2011/092606 A1 (ZHOU JINSHENG [US]) 21 April 2011 (2011-04-21) * the whole document * | 1-13 | |
| A | EP 2 199 319 A1 (GAMBRO LUNDIA AB [SE]) 23 June 2010 (2010-06-23) * the whole document * | 11,12 | |
| A | US 4 134 837 A (YAMASHITA SHUZO ET AL) 16 January 1979 (1979-01-16) * the whole document * | 1-15 | TECHNICAL FIELDS SEARCHED (IPC) B01D |

The present search report has been drawn up for all claims

| Place of search | Date of completion of the search | Examiner |
|---|---|---|
| Munich | 18 January 2012 | Lançon, Eveline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 545 984 A1

## ANNEX TO THE EUROPEAN SEARCH REPORT
## ON EUROPEAN PATENT APPLICATION NO.

EP 11 17 4238

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2012

| Patent document cited in search report | | Publication date | Patent family member(s) | | Publication date |
|---|---|---|---|---|---|
| EP 1666129 | A1 | 07-06-2006 | EP 1666129 A1 | | 07-06-2006 |
| | | | US 2007029256 A1 | | 08-02-2007 |
| | | | WO 2005014149 A1 | | 17-02-2005 |
| EP 1775016 | A1 | 18-04-2007 | CN 101690870 A | | 07-04-2010 |
| | | | EP 1775016 A1 | | 18-04-2007 |
| | | | JP 4504963 B2 | | 14-07-2010 |
| | | | JP 2007136449 A | | 07-06-2007 |
| | | | SG 131871 A1 | | 28-05-2007 |
| US 5294338 | A | 15-03-1994 | DE 69117175 D1 | | 28-03-1996 |
| | | | DE 69117175 T2 | | 24-10-1996 |
| | | | EP 0513390 A1 | | 19-11-1992 |
| | | | US 5294338 A | | 15-03-1994 |
| | | | WO 9209359 A1 | | 11-06-1992 |
| US 2011092606 | A1 | 21-04-2011 | CN 102131567 A | | 20-07-2011 |
| | | | JP 2011526831 A | | 20-10-2011 |
| | | | US 2011092606 A1 | | 21-04-2011 |
| | | | WO 2010002512 A1 | | 07-01-2010 |
| EP 2199319 | A1 | 23-06-2010 | NONE | | |
| US 4134837 | A | 16-01-1979 | JP 51145474 A | | 14-12-1976 |
| | | | US 4134837 A | | 16-01-1979 |

For more details about this annex : see Official Journal of the European Patent Office, No. 12/82

9

**EP 2 545 984 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5084173 A
- WO 2003029329 A
- DE 102005062608 A1